# EUROPEAN PATENT APPLICATION

(11) **EP 4 628 533 A1**
(43) Date of publication of application: **08.10.2025**
(21) Application number: 25154577.8
(22) Date of filing: 29.01.2025
(51) Int. Cl.: C08L 27/06, C08L 91/00, C08K 5/1515, C08K 5/29, C08K 5/3462, C08K 5/38, C08K 5/405, C08K 5/00, C08K 3/105

(54) **CARBODIIMIDE ADDITIVES FOR IMPROVING PERFORMANCE OF PVC COMPOUNDS**

(30) Priority: 04.04.2024 US 202418626997
(71) Applicant: Galata Chemicals, LLC, Jersey City, NJ 07302 (US)
(72) Inventor: FRENKEL, Peter, Danbury, CT, 06811 (US); EVANS, Patrick, Barrie, L4N0Z1 (CA)
(74) Representative: Prinz & Partner mbB

(57) **Abstract**

A heat stabilizer additive for reducing thermal degradation and/or surface resistivity of plasticized PVC compounds comprising: 1.0-25.0 wt% of a carbodiimide; and 75.0-99.0 wt% of a heat stabilizer comprising: (1) zinc-containing component selected from neutral or overbased zinc salts of C₁-C₂₄ linear, branched, cyclic aliphatic or aromatic organic acids, zinc diketonates, zinc alcoholates, zinc oxide, zinc hydroxide, zinc phosphite, zinc perchlorate, zinc carbonate and mixtures thereof, or metal-free nitrogen-containing compounds selected from thiourea, triethanolamine, 6-amino-1,3-dimethyl-uracil, 6-amino-1,3-di-n-propyl-uracil, 6-amino-1,3-di-n-butyl-uracil, 6-amino-1,3-diethyl-thiouracil, 6-amino-1,3-di-n-butyl-thiouracil or mixtures thereof, and optionally (2) co-stabilizers selected from hydrotalcites, zeolites, nitrogen-containing compounds, organic phosphite esters, diketones, and mixed metal compounds; and polymer compounds comprising: 30.0-89.0 wt% of a PVC homopolymer or PVC copolymer; 10.0-69.0 wt% of a primary plasticizer comprising an epoxidized natural oil or it's blends with epoxidized fatty acid monoesters; 0.01-5.0 wt% of the carbodiimide; and 0.3-5.0 wt% of the heat stabilizer.

## Description

### FIELD OF THE INVENTION

The present invention relates to the use of carbodiimides. More particularly, the present invention relates to carbodiimides as heat stabilizer additives for improving performance of PVC compounds.

### BACKGROUND OF THE INVENTION

Epoxidized fatty acid esters and epoxidized seed oils are known to be used as secondary plasticizers/thermal co-stabilizers for scavenging HCl during compounding of plasticized PVC compounds [Plastics Additives Handbook, 4th edition, editors: R. Gächter and H. Müller, associate editor: P. P. Klemchuk; Hanser Publishers (1993 ) p. 382]. Further, various attempts at using carbodiimides for increasing the hydrolytic stability of thermoplastic polyester resins, bio-based polyol esters, polyurethane materials, and other polymeric materials have been made, as shown in DE 10 349 168, US 7,273,902, US 2011/0155960, US 10,927,233, US 2019/0016853, US 2020/0165442, EP 2 416 248, US 2023/0044924, and US 2019/0127554. Nevertheless, a continuing need exists for improved heat stabilizer additive compositions and their use; particularly carbodiimide-based heat stabilizer compositions and their incorporation in PVC containing compositions.

### SUMMARY OF THE INVENTION

The subject matter of the present disclosure relates to carbodiimide-containing polymer compound compositions having increased UV-light stability, reduced exudation and surface resistivity, and reduced metal content heat stabilizers.

In one embodiment, the present disclosure provides a polymer compound comprising: 30.0 to 89.0 wt% of a PVC homopolymer or PVC copolymer; 10.0 to 69.0 wt% of a primary plasticizer comprising an epoxidized natural oil or its blends with epoxidized fatty acid monoesters; 0.01 to 5.0 wt% of a carbodiimide selected from monomeric, oligomeric or polymeric carbodiimides; and 0.3 to 5.0 wt% of a heat stabilizer comprising: (1) zinc-containing components selected from neutral or overbased zinc salts of C₁-C₂₄ linear, branched, cyclic aliphatic or aromatic organic acids, zinc diketonates, zinc alcoholates, zinc phosphite, zinc perchlorate, zinc carbonate and mixtures thereof, or metal-free nitrogen-containing compounds selected from thiourea, triethanolamine, 6-amino-1,3-dimethyl-uracil, 6-amino-1,3-di-n-propyl-uracil, 6-amino-1,3-di-n-butyl-uracil, 6-amino-1,3-diethyl-thiouracil, 6-amino-1,3-di-n-butyl-thiouracil or mixtures thereof, and optionally (2) co-stabilizers selected from hydrotalcites, zeolites, nitrogen-containing compounds, organic phosphite esters, diketones, mixed metal compounds selected from salts of Li, Na, K, Mg, Ca, Sr, Zn, Ba, Cd, Pb, Al, La, Ce or rare earth metals, metal carboxylates from zinc, calcium, magnesium, or barium carboxylates, alkali metal salts of perchloric acid, alkali metal salts of dicarboxylic acids and mixtures thereof.

In another embodiment, the present disclosure provides a heat stabilizer additive for reducing thermal degradation and/or surface resistivity of plasticized PVC compounds comprising: a) 1.0 to 25.0 wt% of a carbodiimide selected from monomeric, oligomeric or polymeric carbodiimides; and b) 75.0 to 99.0 wt% of a heat stabilizer comprising: (1) zinc-containing component selected from neutral or overbased zinc salts of C₁-C₂₄ linear, branched, cyclic aliphatic or aromatic organic acids, zinc diketonates, zinc alcoholates, zinc oxide, zinc hydroxide, zinc phosphite, zinc perchlorate, zinc carbonate and mixtures thereof, or metal-free nitrogen-containing compounds selected from thiourea, triethanolamine, 6-amino-1,3-dimethyl-uracil, 6-amino-1,3-din-propyl-uracil, 6-amino-1,3-di-n-butyl-uracil, 6-amino-1,3-diethyl-thiouracil, 6-amino-1,3-di-n-butyl-thiouracil or mixtures thereof, and optionally (2) co-stabilizers selected from hydrotalcites, zeolites, nitrogen-containing compounds, organic phosphite esters, diketones, mixed metal compounds selected from salts of Li, Na, K, Mg, Ca, Sr, Zn, Ba, Cd, Pb, Al, La, Ce or rare earth metals, metal carboxylates from zinc, calcium, magnesium, or barium carboxylates, alkali metal salts of perchloric acid, alkali metal salts of dicarboxylic acids and mixtures thereof.

In still another embodiment, the present disclosure provides a method for preparing a polymer compound comprising: 30.0 to 89.0 wt% of a PVC homopolymer or PVC copolymer; 10.0 to 69.0 wt% of a primary plasticizer comprising an epoxidized natural oil or its blends with epoxidized fatty acid monoesters; 0.01 to 5.0 wt% of a carbodiimide selected from monomeric, oligomeric or polymeric carbodiimides; and 0.3 to 5.0 wt% of a heat stabilizer comprising: (1) zinc-containing components selected from neutral or overbased zinc salts of C₁-C₂₄ linear, branched, cyclic aliphatic or aromatic organic acids, zinc diketonates, zinc alcoholates, zinc phosphite, zinc perchlorate, zinc carbonate and mixtures thereof, or metal-free nitrogen-containing compounds selected from thiourea, triethanolamine, 6-amino-1,3-dimethyl-uracil, 6-amino-1,3-din-propyl-uracil, 6-amino-1,3-di-n-butyl-uracil, 6-amino-1,3-diethyl-thiouracil, 6-amino-1,3-di-n-butyl-thiouracil or mixtures thereof, and optionally (2) co-stabilizers selected from hydrotalcites, zeolites, nitrogen-containing compounds, organic phosphite esters, diketones, mixed metal compounds selected from salts of Li, Na, K, Mg, Ca, Sr, Zn, Ba, Cd, Pb, Al, La, Ce or rare earth metals, metal carboxylates from zinc, calcium, magnesium, or barium carboxylates, alkali metal salts of perchloric acid, alkali metal salts of dicarboxylic acids and mixtures thereof, the process comprising combining the PVC homopolymer or PVC copolymer, primary plasticizer, carbodiimide and heat stabilizer.

In another embodiment, the present disclosure provides a stabilized compound comprising a PVC polymer; and a heat stabilizer additive for reducing thermal degradation and/or surface resistivity of plasticized PVC compounds comprising: a) 1.0 to 25.0 wt% of a carbodiimide selected from monomeric, oligomeric or polymeric carbodiimides; and b) 75.0 to 99.0 wt% of a heat stabilizer comprising: (1) zinc-containing component selected from neutral or overbased zinc salts of C₁-C₂₄ linear, branched, cyclic aliphatic or aromatic organic acids, zinc diketonates, zinc alcoholates, zinc oxide, zinc hydroxide, zinc phosphite, zinc perchlorate, zinc carbonate and mixtures thereof, or metal-free nitrogen-containing compounds selected from thiourea, triethanolamine, 6-amino-1,3-dimethyl-uracil, 6-amino-1,3-di-n-propyl-uracil, 6-amino-1,3-di-n-butyl-uracil, 6-amino-1,3-diethyl-thiouracil, 6-amino-1,3-di-n-butyl-thiouracil or mixtures thereof, and optionally (2) co-stabilizers selected from hydrotalcites, zeolites, nitrogen-containing compounds, organic phosphite esters, diketones, mixed metal compounds selected from salts of Li, Na, K, Mg, Ca, Sr, Zn, Ba, Cd, Pb, Al, La, Ce or rare earth metals, metal carboxylates from zinc, calcium, magnesium, or barium carboxylates, alkali metal salts of perchloric acid, alkali metal salts of dicarboxylic acids and mixtures thereof, wherein the stabilizer is present in an amount from 0.001 to 10 parts by weight per 100 parts by weight of the PVC polymer.

In still another embodiment, the present disclosure provides an article comprising a PVC compound comprising: 30.0 to 89.0 wt% of a PVC homopolymer or PVC copolymer; 10.0 to 69.0 wt% of a primary plasticizer comprising an epoxidized natural oil or its blends with epoxidized fatty acid monoesters; 0.01 to 5.0 wt% of a carbodiimide selected from monomeric, oligomeric or polymeric carbodiimides; and 0.3 to 5.0 wt% of a heat stabilizer comprising: (1) zinc-containing components selected from neutral or overbased zinc salts of C₁-C₂₄ linear, branched, cyclic aliphatic or aromatic organic acids, zinc diketonates, zinc alcoholates, zinc phosphite, zinc perchlorate, zinc carbonate and mixtures thereof, or metal-free nitrogen-containing compounds selected from thiourea, triethanolamine, 6-amino-1,3-dimethyl-uracil, 6-amino-1,3-di-n-propyl-uracil, 6-amino-1,3-di-n-butyl-uracil, 6-amino-1,3-diethyl-thiouracil, 6-amino-1,3-di-n-butyl-thiouracil or mixtures thereof, and optionally (2) co-stabilizers selected from hydrotalcites, zeolites, nitrogen-containing compounds, organic phosphite esters, diketones, mixed metal compounds selected from salts of Li, Na, K, Mg, Ca, Sr, Zn, Ba, Cd, Pb, Al, La, Ce or rare earth metals, metal carboxylates from zinc, calcium, magnesium, or barium carboxylates, alkali metal salts of perchloric acid, alkali metal salts of dicarboxylic acids and mixtures thereof.

In another embodiment the present disclosure provides a process to form an article comprising a PVC compound a polymer compound comprising: 30.0 to 89.0 wt% of a PVC homopolymer or PVC copolymer; 10.0 to 69.0 wt% of a primary plasticizer comprising an epoxidized natural oil or its blends with epoxidized fatty acid monoesters; 0.01 to 5.0 wt% of a carbodiimide selected from monomeric, oligomeric or polymeric carbodiimides; and 0.3 to 5.0 wt% of a heat stabilizer comprising: (1) zinc-containing components selected from neutral or overbased zinc salts of C₁-C₂₄ linear, branched, cyclic aliphatic or aromatic organic acids, zinc diketonates, zinc alcoholates, zinc phosphite, zinc perchlorate, zinc carbonate and mixtures thereof, or metal-free nitrogen-containing compounds selected from thiourea, triethanolamine, 6-amino-1,3-dimethyl-uracil, 6-amino-1,3-di-n-propyl-uracil, 6-amino-1,3-di-n-butyl-uracil, 6-amino-1,3-diethyl-thiouracil, 6-amino-1,3-di-n-butyl-thiouracil or mixtures thereof, and optionally (2) co-stabilizers selected from hydrotalcites, zeolites, nitrogen-containing compounds, organic phosphite esters, diketones, mixed metal compounds selected from salts of Li, Na, K, Mg, Ca, Sr, Zn, Ba, Cd, Pb, Al, La, Ce or rare earth metals, metal carboxylates from zinc, calcium, magnesium, or barium carboxylates, alkali metal salts of perchloric acid, alkali metal salts of dicarboxylic acids and mixtures thereof, the process comprising compounding steps selected from calendaring, molding or extrusion.

In an embodiment, the present disclosure provides a process to reduce the surface resistivity of a PVC compound with a carbodiimide-containing heat stabilizer additive, the process comprising compounding a PVC compound with a carbodiimide-containing heat stabilizer to form a compounded composition comprising: 30.0 to 89.0 wt% of a PVC homopolymer or PVC copolymer; 10.0 to 69.0 wt% of a primary plasticizer comprising an epoxidized natural oil or its blends with epoxidized fatty acid monoesters; 0.01 to 5.0 wt% of a carbodiimide selected from monomeric, oligomeric or polymeric carbodiimides; and 0.3 to 5.0 wt% of a heat stabilizer comprising: (1) zinc-containing components selected from neutral or overbased zinc salts of C₁-C₂₄ linear, branched, cyclic aliphatic or aromatic organic acids, zinc diketonates, zinc alcoholates, zinc phosphite, zinc perchlorate, zinc carbonate and mixtures thereof, or metal-free nitrogen-containing compounds selected from thiourea, triethanolamine, 6-amino-1,3-dimethyl-uracil, 6-amino-1,3-di-n-propyl-uracil, 6-amino-1,3-di-n-butyl-uracil, 6-amino-1,3-diethyl-thiouracil, 6-amino-1,3-di-n-butyl-thiouracil or mixtures thereof, and optionally (2) co-stabilizers selected from hydrotalcites, zeolites, nitrogen-containing compounds, organic phosphite esters, diketones, mixed metal compounds selected from salts of Li, Na, K, Mg, Ca, Sr, Zn, Ba, Cd, Pb, Al, La, Ce or rare earth metals, metal carboxylates from zinc, calcium, magnesium, or barium carboxylates, alkali metal salts of perchloric acid, alkali metal salts of dicarboxylic acids and mixtures thereof, wherein the surface resistivity of the compounded PVC is at most 30% of the surface resistivity of an identical compounded PVC without the carbodiimide compound.

Finally, in another embodiment, the present disclosure provides a process to reduce the thermal degradation of a PVC compound with a carbodiimide-containing heat stabilizer additive, the process comprising compounding a PVC compound with a carbodiimide-containing heat stabilizer to form a compounded composition comprising: 30.0 to 89.0 wt% of a PVC homopolymer or PVC copolymer; 10.0 to 69.0 wt% of a primary plasticizer comprising an epoxidized natural oil or its blends with epoxidized fatty acid monoesters; 0.01 to 5.0 wt% of a carbodiimide selected from monomeric, oligomeric or polymeric carbodiimides; and 0.3 to 5.0 wt% of a heat stabilizer comprising: (1) zinc-containing components selected from neutral or overbased zinc salts of C₁-C₂₄ linear, branched, cyclic aliphatic or aromatic organic acids, zinc diketonates, zinc alcoholates, zinc phosphite, zinc perchlorate, zinc carbonate and mixtures thereof, or metal-free nitrogen-containing compounds selected from thiourea, triethanolamine, 6-amino-1,3-dimethyl-uracil, 6-amino-1,3-di-n-propyl-uracil, 6-amino-1,3-di-n-butyl-uracil, 6-amino-1,3-diethyl-thiouracil, 6-amino-1,3-di-n-butyl-thiouracil or mixtures thereof, and optionally (2) co-stabilizers selected from hydrotalcites, zeolites, nitrogen-containing compounds, organic phosphite esters, diketones, mixed metal compounds selected from salts of Li, Na, K, Mg, Ca, Sr, Zn, Ba, Cd, Pb, Al, La, Ce or rare earth metals, metal carboxylates from zinc, calcium, magnesium, or barium carboxylates, alkali metal salts of perchloric acid, alkali metal salts of dicarboxylic acids and mixtures thereof, wherein the surface resistivity of the compounded PVC is at most 30% of the surface resistivity of an identical compounded PVC without the carbodiimide compound.

### DETAILED DESCRIPTION OF THE INVENTION

The subject matter of the present disclosure provides innovative heat stabilizer additives and PVC compositions containing them.

It was unexpectedly found that plasticized PVC compounds containing carbodiimides substantially increased UV-light stability, and reduced exudation of PVC compounds plasticized by epoxidized natural oils and their blends with epoxidized fatty acid monoesters. The improvement was much more pronounced compared to the use of the conventional plasticizers described in prior art. Additionally, it was surprisingly uncovered that the carbodiimides are effective heat co-stabilizers for plasticized PVC compounds against thermal decomposition and antistatic agents that significantly reduce surface resistance of the plasticized PVC compounds.

The flexible compounds of this invention comprise a) polyvinyl chloride or its copolymers; b) primary plasticizers based epoxidized natural oils and their blends with epoxidized fatty acid monoesters added at 10 - 200 parts by weight per 100 parts of the polymer resin, c) carbodiimides added at 0.1 to 10 parts by weight per 100 parts of the polymer resin, and d) conventional heat co-stabilizers.

In one embodiment, the present disclosure provides a polymer compound comprising: 30.0 to 89.0 wt% of a PVC homopolymer or PVC copolymer; 10.0 to 69.0 wt% of a primary plasticizer comprising an epoxidized natural oil or its blends with epoxidized fatty acid monoesters; 0.01 to 5.0 wt% of a carbodiimide selected from monomeric, oligomeric or polymeric carbodiimides; and 0.3 to 5.0 wt% of a heat stabilizer comprising: (1) zinc-containing components selected from neutral or overbased zinc salts of C₁-C₂₄ linear, branched, cyclic aliphatic or aromatic organic acids, zinc diketonates, zinc alcoholates, zinc phosphite, zinc perchlorate, zinc carbonate and mixtures thereof, or metal-free nitrogen-containing compounds selected from thiourea, triethanolamine, 6-amino-1,3-dimethyl-uracil, 6-amino-1,3-di-n-propyl-uracil, 6-amino-1,3-di-n-butyl-uracil, 6-amino-1,3-diethyl-thiouracil, 6-amino-1,3-di-n-butyl-thiouracil or mixtures thereof, and optionally (2) co-stabilizers selected from hydrotalcites, zeolites, nitrogen-containing compounds, organic phosphite esters, diketones, mixed metal compounds selected from salts of Li, Na, K, Mg, Ca, Sr, Zn, Ba, Cd, Pb, Al, La, Ce or rare earth metals, metal carboxylates from zinc, calcium, magnesium, or barium carboxylates, alkali metal salts of perchloric acid, alkali metal salts of dicarboxylic acids and mixtures thereof.

Preferably, the PVC homopolymer or PVC copolymer is present in an of 30 to 79 wt%. The primary plasticizer is preferably present in an amount of 20 to 69 wt%. The carbodiimide is preferably present in an amount of 0.01 to 2 wt%.

In another embodiment, the present disclosure provides a heat stabilizer additive for reducing thermal degradation and/or surface resistivity of plasticized PVC compounds comprising: a) 1.0 to 25.0 wt% of a carbodiimide selected from monomeric, oligomeric or polymeric carbodiimides; and b) 75.0 to 99.0 wt% of a heat stabilizer comprising: (1) zinc-containing component selected from neutral or overbased zinc salts of C₁-C₂₄ linear, branched, cyclic aliphatic or aromatic organic acids, zinc diketonates, zinc alcoholates, zinc oxide, zinc hydroxide, zinc phosphite, zinc perchlorate, zinc carbonate and mixtures thereof, or metal-free nitrogen-containing compounds selected from thiourea, triethanolamine, 6-amino-1,3-dimethyl-uracil, 6-amino-1,3-din-propyl-uracil, 6-amino-1,3-di-n-butyl-uracil, 6-amino-1,3-diethyl-thiouracil, 6-amino-1,3-di-n-butyl-thiouracil or mixtures thereof, and optionally (2) co-stabilizers selected from hydrotalcites, zeolites, nitrogen-containing compounds, organic phosphite esters, diketones, mixed metal compounds selected from salts of Li, Na, K, Mg, Ca, Sr, Zn, Ba, Cd, Pb, Al, La, Ce or rare earth metals, metal carboxylates from zinc, calcium, magnesium, or barium carboxylates, alkali metal salts of perchloric acid, alkali metal salts of dicarboxylic acids and mixtures thereof. Preferably, the carbodiimide is present in an amount of 5 to 25wt%, and the heat stabilizer is preferably present in an amount of 75 to 95 wt%.

### Polyvinyl Chloride

As employed herein, the term polyvinyl chloride ("PVC") is intended to include both homopolymers obtained via polymerization in bulk, in suspension, or in emulsion, and copolymers of vinyl chloride, i.e., vinyl resins containing vinyl chloride units in their structure, e.g., copolymers of vinyl chloride and vinyl esters of aliphatic acids, in particular vinyl acetate; copolymers of vinyl chloride with esters of acrylic and methacrylic acid and with acrylonitrile; and the like.

The term PVC as employed herein is also intended to include graft polymers of PVC with ethyl-vinyl acetate ("EVA"), acrylonitrile/butadiene-styrene ("ABS"), and meth-acrylate-butadiene ("MBS"). Preferred substrates are also mixtures of the above-mentioned homopolymers and copolymers, preferably vinyl chloride homopolymers, with other thermoplastic and/or elastomeric polymers, more preferably blends with ABS, MBS, acrylonitrile butadiene ("NBR"), styrene-acrylonitrile ("SAN"), EVA, chlorinated polyethylene ("CPE"), poly(methyl methylacrylate), ethylene propylene diene monomer ("EPDM"), and polylactones. Preferably, vinyl acetate, vinylidene dichloride, acrylonitrile, chlorofluoroethylene and/or the esters of acrylic, fumaric, maleic and/or itaconic acids are monomers that are copolymerizable with vinyl chloride.

### Primary Plasticizers

For the purposes of this specification, the term "primary" plasticizer means that while a compound may contain several plasticizers, the content of the primary plasticizer in the total amount of plasticizers is equal to or greater than 25% by weight, and it is added to the PVC compound at greater than 10 parts by weight per 100 parts by weight of PVC or its copolymers.

Primary plasticizers of this invention suitable for plasticizing PVC compounds are epoxidized natural oils comprising epoxidized plant oils and epoxidized animal fats. For the purposes of this specification, the expression "derived from" means "sourced from," so the oils and fats were used as feedstocks from which the epoxidized natural oils were obtained.

Suitable natural oils are plant oils and animal fats which may also contain triglyceride esters of fatty acids. The plant oils are selected from soybean oil, palm oil, olive oil, tall oil, castor oil, cotton seed oil, linseed oil, safflower oil, sunflower oil, canola oil, rapeseed oil, jatropha oil, algae oil, corn oil, tung oil, or mixtures thereof. Preferably, the natural oils are selected from soybean oil, linseed oil, or mixtures thereof.

Suitable animal fats are selected from beef/mutton, pork, dairy, poultry fat or mixtures thereof. Preferably, the animal fats are selected from suet, dripping, tallow, lard, bacon, fatback, butter, poultry fat, schmaltz, blubber or mixtures thereof. The natural oils derived from plant oils and animal fats are substantially fully epoxidized.

For the purposes of this specification, the term "substantially fully epoxidized" means that the amount of non-epoxidized double bonds is less than about 20% and more preferably less than 5% of the total amount of double bonds present in certain fatty acids of the natural oils (examples of those fatty acids are oleic acid, linoleic acid, or linolenic acid). Most preferred examples of epoxidized natural oils are epoxidized soybean oil, epoxidized linseed oil, epoxidized canola oil and rapeseed oil.

The primary plasticizers of this invention suitable for plasticizing PVC compounds may also include blends of at least one epoxidized natural oil and at least one epoxidized fatty acid ester (preferably epoxidized methyl oleate, epoxidized methyl soyate, epoxidized methyl tallate, epoxidized 2-ethylhexyl oleate, epoxidized 2-ethylhexyl soyate and epoxidized 2-ethylhexyl tallate) and the like. Preferably, the blends contain 10-90% epoxidized natural oils and 10-90% epoxidized fatty acid monoesters. The blends are storage stable, homogeneous liquids.

An overview of plasticizers can be found at PLASTICS ADDITIVES HANDBOOK, 4th edition, ed. Gächter/Müller, Hansa Gardner Publishers, Munich, 1993, pg. 327-422, which is incorporated by reference herein in its entirety. Preferably, the primary plasticizers are selected from the group consisting of phthalates (for example, dioctyl tere-phthalate), epoxidized soybean oil, and mixtures thereof. The primary plasticizers are present in the compound in an amount of greater than 10 to 200 parts by weight, preferably in an amount from 15 to 75 parts by weight, more preferably 30 to 50 parts by weight based on 100 parts by weight of PVC or its copolymers.

Any of the conventional blending processes, methods and techniques known to those skilled in the art, for example, admixing and mixing, can be used to prepare the liquid blends for the purpose of attaining homogeneity and/or stability. The epoxidized natural oils can be combined in an admixture or blend, and kept, with or without agitation, for a predetermined amount of time at ambient temperature where the predetermined amount of time is in the range of from 1 to 24 hours, preferably from 1 to 10 hours, more preferably from two to four hours. Also preferred are times of 1, 2, 3, 4, 5, 6, 7, 8, 9, 10, 12, 14, 18, 22 hours.

The epoxidized natural oils and epoxidized fatty acid monoesters are combined at a temperature in the range from 0-300 °C. Preferred is a temperature range from 10-100 °C. More preferred is a range from 20-80 °C. Most preferred is a range from 30-60 °C.

Both the conventional heat stabilizers and tailored mixed metal stabilizers, as described, for example in US 9,346,939, can be used in compounds plasticized with epoxidized natural oil and their blends with epoxidized fatty acid monoesters.

### Carbodiimides

The suitable carbodiimides used according to the invention can vary within wide ranges. Preferably, the carbodiimides are selected from monomeric, oligomeric or polymeric carbodiimides. More preferably, the carbodiimides are aromatic oligomeric/polymer carbodiimides, and are described, e.g., in US 2019/0127554. When the carbodiimide is a polymeric aromatic carbodiimide it preferably includes at least one polymeric aromatic carbodiimide of formula (I):

R⁴-R⁸-(-N=C=N-R⁸-)*ₘ*-R⁴ (I)

in which
*m* represents an integer from 2 to 500,
R⁶ is C₁-C₁₂-alkyl-substituted arylenes, C₇-C₁₈ alkylaryl-substituted arylenes and optionally C₁-C₁₂-alkyl-substituted alkylene bridged arylenes comprising a total of 7 to 30 carbon atoms, and arylene, and
R⁴ is -NCO, -NCNR⁵, -NHCONR⁵R⁸ or NHCOOR⁷, wherein
R⁵ and R⁶ are identical or different and represent a C₁-C₁₂-alkyl, C₆-C₁₂-cycloslkyl, C₇-C₁₈aralkyl, or aryl radical, and
R⁷ represents a C₁-C₂₂-alkyl, C₆-C₁₂-cycloalkyl, C₆-C₁₈aryl, or C7-C18-aralkyl radical and an unsaturated alkyl radical having 2-22 carbon atoms or an alkoxypolyoxyalkylene radical.

Examples of more preferred carbodiimides include Stabaxol I LF (SI LF), a solid monomeric aromatic carbodiimide, Stabaxol P200 (SP200), a liquid oligomeric/polymeric aromatic carbodiimide, based on based on tetramethylxylene diisocyanate received from Lanxess Corporation, and Bio-SAH 342Liquid (a liquid polymeric carbodiimide; polymerized 1,3-Bis(1-isocyanato-1-methylethyl)benzene) from Suzhou Ke Sheng Tong New Materials Technology Co., Ltd.

The carbodiimides can be introduced into the compounds of the invention through at least one of the following options: a) separate components added directly into PVC dry bends, b) components of plasticizers, c) components of heat stabilizers or d) combinations of the above. If introduced with plasticizers, the carbodiimides are added to the plasticizers at 0.1-5.0 %, preferably 0.5-1.0%. If introduced with the stabilizers, the amount of the carbodiimides in the heat stabilizers is up to 25% based on the weight of the stabilizer. Preferably, the carbodiimide is present in an amount from 5% to 25% based on the total weight of the stabilizer. More preferably, the carbodiimide is present in an amount from 5 to 20, even more preferably in an amount from 7 to 19 based on the total weight of the stabilizer.

Another aspect of this invention is using carbodiimides as co-stabilizers in combination with other co-stabilizers for the preparation of heat stabilizers of reduced metal content that are intended to reduce the rate of thermal degradation and/or surface resistivity of PVC compounds. The heat stabilizers of this invention comprise either a) carbodiimides and zinc-containing components or b) carbodiimides and metal-free nitrogen-containing compounds.

The zinc-containing components are selected from the group consisting of neutral or overbased zinc salts of C1-C24 linear, branched, cyclic aliphatic or aromatic organic acids, zinc diketonates, zinc alcoholates, zinc oxide, zinc hydroxide, zinc phosphite, zinc perchlorate, zinc carbonate and mixtures thereof. Preferred salts of organic acids are selected from the group consisting of benzoate, oleate, stearate, neodecanoate, palmitate, soyate, tallate, myristylate, hydroxystearate, laurates and isononanoate. More preferred components are calcium stearate and zinc stearate.

The zinc-containing component is typically present in the stabilizer in an amount of up to 25% based on the weight of the stabilizer. Preferably, the zinc-containing component is present in amounts from 0.005% to 10%, based on the total weight of the stabilizer.

The metal-free nitrogen-containing components of heat stabilizers of this invention are preferably selected from the group consisting of thiourea, triethanolamine as well as uracil-based components such as 6-amino-1,3-dimethyl-uracil, 6-amino-1,3-di-n-propyl-uracil, 6-amino-1,3-di-n-butyl-uracil, 6-amino-1,3-diethyl-thiouracil, 6-amino-1,3-di-n-butyl-thiouracil. The more preferred uracil-based nitrogen-containing component is 6-amino-1,3-dimethyluracil.

The metals-free nitrogen-containing components are typically present in the heat stabilizer in an amount of up to 30% based on the weight of the heat stabilizer. Preferably, the metal-free nitrogen-containing components are present in amounts from 0.005% to 25%, based on the total weight of the stabilizer.

Plasticizers suitable for use with these stabilizers of this invention include both the conventional plasticizers as well as the plasticizers of this invention (epoxidized natural oils and their combinations with epoxidized fatty acid esters).

### Other (Conventional) Co-stabilizers

In addition to the carbodiimides (regardless of whether they are introduced with plasticizers or stabilizers), the stabilizer compositions may contain conventional co-stabilizers. The co-stabilizers, which can be present in the PVC compounds containing the carbodiimides, include alkyltin compounds, layered lattice compounds (calcium-aluminum hydroxycarbonates known also as hydrotalcites), zeolites, nitrogen-containing compounds, organic phosphite esters, diketones, mixed metal compounds, alkali metal salts of perchloric acid, alkali metal salts of dicarboxylic acids and mixtures thereof.

### Hydrotalcites

Examples of hydrotalcites that may be used as co-stabilizers are compounds known to those skilled in the art as shown, for example, in DE 384 35 81, EP 0 062 813 and WO 1993/20135.
Hydrotalcites that can be present in the compositions preferably include those of the general formula: M²⁺₁₋ₓM³⁺ₓ(OH)₂(An^{b-})_{x/b}dH₂O, wherein M²⁺ represents one or more metals from the group Mg, Ca, Sr, Zn and Sn, M³⁺ represents Al or B, An is an anion having the valency n, b is a number from 1 to 2, 0<x<0.5, and d is a number in the range from 0 to 300, preferably in the range from 0.5 to 30. Preferably, An is OH⁻, HCO₃⁻, or CO₃²⁻.

Examples of hydrotalcites include Al₂O₃6MgOCO₂12H₂O (i), Mg_{4,5} Al₂(OH)_{1.3}CO₂3.5H₂O (ii), 4MgOAl₂O₃CO₂9H₂O (iii), 4MgOAl₂O₃CO₂6H₂O (iv), ZnO3MgOAl₂O₃CO₂8-9H₂O (v), and ZnO3MgOAl₂O₃CO₂5-6H₂O (vi). Preferred are types i, ii and iii.

The hydrotalcites preferably can be present in the chlorine-containing polymer in an amount of from 0.1 to 20 parts by weight, preferably from 0.1 to 10 parts by weight and more preferably from 0.1 to 5 parts by weight per 100 parts by weight of chlorine-containing polymer.

### Zeolites

Zeolite co-stabilizers are preferably described by the general formula: M_{x/n}[(AlO₂)x(SiO₂)_{y}]wH₂O, wherein n is the charge of the cation M, M is an element from the first or second main groups of the Periodic Table, such as Li, Na, K, Mg, Ca, Sr or Ba; y and x are numbers that range from 0.8 to 15, preferably from 0.8 to 1.2; and w is a number from 0 to 300, preferably from 0.5 to 30. Examples of zeolites include sodium aluminosilicates of the following types: zeolite A, zeolite Y, zeolite X, zeolite LSX; or the zeolites prepared by complete or partial replacement of the Na atoms by Li, K, Mg, Ca, Sr or Zn atoms. The preferred Si/Al ratio is about 1:1. Preferred zeolites are Na zeolite A and Na zeolite P. The zeolites are used in an amount from 0.1 to 10.0 parts by weight based on 100 parts of chlorine-containing polymers.

### Organic Phosphite Esters

Suitable phosphites are preferably selected from triphenyl phosphite, diphenyl isodecyl phosphite, ethylhexyl diphenyl phosphite, phenyl diisodecyl phosphite, trilauryl phosphite, triisononyl phosphite, triisodecyl phosphite, epoxy grade triphenyl phosphite, diphenyl phoshite, tris(nonylphenyl) phosphite, phosphites of polyols or mixtures thereof. The phosphites can be present in the compound in an amount of from 0.01 to 10 parts by weight, preferably from 0.05 to 5 parts by weight, and more preferably from 0.1 to 3 parts by weight per 100 parts by weight of chlorine-containing polymers.

### 1,3-Diketones

The mixed metal stabilizer can also contain 1,3-diketones in a range of 0% to 10%, both based on the total weight of the mixed metal stabilizer. Examples of 1,3-diketones are acetylacetone, dibenzoylmethane, and stearoylbenzoylmethane.

### Mixed Metal Compounds

The mixed metal compounds preferably comprise at least two metal salts, where the metal is selected from Li, Na, K, Mg, Ca, Sr, Zn, Ba, Cd, Pb, Al, La, Ce or rare earth metals. Preferably, the mixed metal compounds comprise barium and zinc, magnesium and zinc, calcium and zinc, or calcium, magnesium and zinc. Preferably, the metal compounds are independently selected from carboxylates, overbased carboxylates, glycerolates, oxides, hydroxides, phosphites, perchlorates, carbonates, basic carbonates or benzoates; where the carboxylates are independently selected from benzoates, oleates, stearates, neodecanoates, palmitates, soyates, tallates, myristylates, hydroxystearates, dihydroxy-stearates, laurates, 2-ethylhexanoates and salts of shorter-chain alkanecarboxylic acids.

Preferably, the metal carboxylates are independently selected from zinc, calcium, magnesium, or barium carboxylates of carboxylic acids having 7 to 18 carbon atoms. More preferably, the metal carboxylates are independently selected from the zinc, calcium, magnesium or barium salts of monovalent carboxylic acids such as octanoic, neodecanoic, 2-ethylhexanoic, decanoic, undecanoic, dodecanoic, tridecanoic, myristic, palmitic, isostearic, stearic, 12-hydroxystearic, lauric, behenic, and sorbic acid; and the calcium, magnesium and zinc salts of divalent carboxylic acids, such as oxalic, malonic, succinic, glutaric, adipic, fumaric, phthalic, isophthalic, terephthalic, hydroxyphthalic acid and citric acid. Overbased carboxylates, such as overbased zinc octoate and overbased calcium or barium soaps, are also preferred.

The zinc compound is typically present in the mixed metal stabilizer in an amount up to 25% based on the weight of the mixed metal stabilizer. Preferably, the zinc compound is present in an amount from 0.005% to 10%, based on the weight of the mixed metal stabilizer. The other metal compound is present in the mixed metal stabilizer in an amount up to 35% based on the weight of the mixed metal stabilizer. Preferably, the metal compound is present in an amount from 0.001% to 15% based on the weight of the mixed metal stabilizer.

The mixed metal stabilizer is preferably present in the compound in an amount from 0.001 to 10 parts by weight, preferably from 0.01 to 8 parts by weight, and more preferably from 0.05 to 5 parts by weight per 100 parts by weight of chlorine-containing polymers. Preferably, the metal compounds are selected from the groups of calcium/zinc or barium/zinc compounds.

### Alkali metal salts of perchloric acid

For the purposes of the present subject matter invention, examples of these materials include Li, Na, K, Rb and Cs salts of perchloric acid. The preferred alkali metal salt of perchloric acid is sodium perchlorate. The preferred loadings are 0.1-5.0 phr, more preferred loading is 0.1-1.0 phr.

### Alkali metal salts of dicarboxylic acids

For the purposes of the present invention, examples of these materials preferably include salts of Li, Na, K, Rb and Cs and dicarboxylic acids selected from the group consisting of saturated and unsaturated dicarboxylic acids containing a total of C2-C10 carbon atoms, including succinic acid, glutaric acid, adipic acid, fumaric acid, azelaic acid, sebacic acid, itaconic acid, phthalic acid, iso-phthalic acid, tere-phthalic acid and mixtures thereof. Examples of preferred alkali metal salts of dicarboxylic acids are sodium adipate and sodium sebacate. The preferred loadings are 0.1-5.0 phr, more preferred loading is 0.1-2.0 phr.

### Optional Conventional Plasticizers

PVC compounds may contain one or more conventional plasticizers and their blends. Exemplary plasticizers are branched and linear ortho- and tere-phthalates, hydrogenated phthalates, aliphatic esters of dicarboxylic acids, polymeric esters of dicarboxylic acids, citrates, sucrose esters, levulinic ketal esters, phosphates, alkyl phenol sulfonates, pyrrolidones, trimellitates, esters of benzoic acid, epoxidized oils, epoxidized mono-esters of fatty acids, dialkylthiodiesters and the like. An overview of conventional plasticizers is found at PLASTICS ADDITIVES HANDBOOK, 4th edition, ed. Gächter/Müller, Hansa Gardner Publishers, Munich, 1993, p. 327-422, which is incorporated by reference herein in its entirety. Preferably, the plasticizers are selected from the group consisting of phthalates, substantially fully esterified mono-, di- and tribasic acids, adipates, azelates, succinates, glutarates, glycol esters, sucrose esters, levulinic ketal esters, citrates, phosphates, alkyl phenol sulfonates, pyrrolidones, epoxidized esters and mixtures thereof. The plasticizers are added at 10-100 phr, preferably at 10.0 to 50.0 phr to the PVC compounds, reducing their hardness.

### Optional Additives

Optionally, the PVC compounds may also include one or more additives to enhance or modify chemical or physical properties, such as lubricity, color, and viscosity. Exemplary additives include, but are not limited to, lubricants, viscosity control agents, UV absorbers, antioxidants, process aids, impact modifiers, antistatic agents, antimicrobials and antifungal compounds, fillers, fusion promoters, pigments, flame retardants, smoke suppressants, chemical foaming agents, reinforcing agents, metal release agents, dispersants among other compounds conventionally used in flexible PVC formulations. These additives may be added to the chlorine-containing resins using techniques and equipment well known to those of ordinary skill in the art. An overview of these can be found in Plastics Additives Handbook, 4th edition, editors: R. Gächter and H. Müller, associate editor: P. P. Klemchuk; Hanser Publishers, Munich, (1993) and Plastics Additives and Modifiers Handbook, ed. J. Edenbaum; Van Nostrand Reinhold, (1992).

### Lubricants

Suitable lubricants are selected from fatty acids, fatty alcohols, montan wax, fatty acid esters, polyethylene waxes, amide waxes, chloroparaffins, glycerol esters, alkaline earth metal soaps, fatty ketones, or mixtures thereof. Preferably, the lubricant is stearic acid. The lubricants can be present in amounts from 0.1 to 0.5 parts by weight, based on 100 parts by weight of chlorine-containing polymer.

### Fillers

Suitable fillers are preferably selected from calcium carbonate, dolomite, wollastonite, magnesium oxide, magnesium hydroxide, silicates, china clay, talc, glass fibers, glass beads, wood flour, mica, metal oxides or metal hydroxides, carbon black, graphite, rock flour, heavy spar, glass fibers, talc, kaolin, chalk or mixtures thereof. The fillers can be present in amounts of 1 to 100 parts by weight, more preferably in amounts of 1 to 40 parts by weight and most preferably in amounts of 10 to 30 parts by weight, based on 100 parts by weight of chlorine-containing polymers.

### Pigments

Suitable pigments are preferably selected from TiO₂, calcium silicate, pigments based on zirconium oxide, BaSO₄, and zinc oxide (zinc white) or mixtures thereof. The pigments can be present in amounts of 1 to 20 parts by weight, based on 100 parts by weight of chlorine-containing polymers.

### Antioxidants

Suitable antioxidants are preferably selected from alkylated monophenols such as 2,6-di-tert-butyl-4-methylphenol, alkylthiomethylphenols, 2,4-dioctylthiomethyl-6-tert-butylphenol; alkylated hydroquinones such as 2,6-di-tert-butyl-4-methoxyphenol; hydroxylated thiodiphenyl ethers such as 2,2'-thiobis(6-tert-butyl-4-methylphenol); alkylidenebisphenols such as 2,2'-methylene-bis(6-tert-butyl-4-methylphenol); benzyl compounds such as 3,5,3',5'-tetratert-butyl-4,4'-dihydroxydibenzyl ether; hydroxybenzylated malonates, such as dioctadecyl 2,2-bis(3,5-di-tert-butyl-2-hydroxybenzyl)malonate; hydroxybenzyl aromatics such as 1,3,5-tris(3,5-di-tert-butyl-4-hydroxybenzyl)-2,4,6-trimethylbenzene; triazine compounds such as 2,4-bisoctylmercapto-6-(3,5-di-tert-butyl-4-hydroxyanilino)-1,3,5-triazine; phosphonates and phosphonites such as dimethyl 2,5-di-tert-butyl-4-hydroxybenzylphosphonate; acylaminophenols such as 4-hydroxylauranilide; esters of β-(3,5-ditert-butyl-4-hydroxyphenyl)propionic acid such as pentaerythritol tetrakis(3-(3,5-di-tert-butyl-4-hydroxyphenyl)propionate), octadecyl-3-(3,5-di-tert-butyl-4-hydroxyphenyl)propionate, β-(5-tert-butyl-4-hydroxy-3-methylphenyl)propionic acid, and β-(3,5-dicyclohexyl-4-hydroxyphenyl)propionic acid; esters of 3,5-ditert-butyl-4-hydroxyphenylacetic acid with mono- or polyhydric alcohols; amides of β-(3,5-ditert-butyl-4-hydroxyphenyl)propionic acid such as N,N'-bis(3,5-ditert-butyl-4-hydroxyphenylpropionyl)hexamethylenediamine; vitamin E (tocopherol) and derivatives or mixtures thereof. The antioxidants can be present in amounts of 0.01 to 10 parts by weight, preferably, 0.1 to 5 parts by weight and more preferably from 0.1 to 3 parts by weight, based on 100 parts by weight of chlorine-containing polymers.

### UV Absorbers and Light Stabilizers

The UV absorbers and light stabilizers are preferably selected from 2-(2'-hydroxyphenyl)benzotriazoles such as 2-(2'-hydroxy-5'-methylphenyl)-benzotriazole, 2-hydroxybenzophenones; esters of unsubstituted or substituted benzoic acids such as 4-tert-butylphenyl salicylate and phenyl salicylate; acrylates; nickel compounds; oxalamides such as 4,4'-dioctyloxyoxanilide, and 2,2'-dioctyloxy-5,5'-ditert-butyloxanilide; 2-(2-hydroxyphenyl)-1,3,5-triazines such as 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine; sterically hindered amines such as bis(2,2,6,6-tetramethylpiperidin-4-yl) sebacate, bis(2,2,6,6-tetramethylpiperidin-4-yl) succinate or mixtures thereof.

### Blending/Compounding

The PVC-containing polymers and the additives may preferably be combined via dry blending and/or compounding steps. The PVC polymers with additives can be fabricated into finished and semi-finished goods and articles, including film, sheet, foamed sheet, flooring, weatherable exterior, siding capstock and substrate, doors, decking, profiles, pipes, roofing, automotive, packaging, medical devices, toys or waterproofed articles. Such articles can be produced via molding, calendaring or extrusion.

PVC compounds of this invention containing the described heat stabilizer demonstrate superior UV-light stability and exudation resistance, while the heat stabilizers of the subject matter demonstrate the ability to serve as antistatic agents for plasticized PVC compounds containing them. The heat stabilizer additive also (co)stabilizes plasticized PVC compounds against thermal degradation, and significantly reduces surface resistivity of the plasticized PVC compounds. Preferably, the surface resistivity of the resultant compounded PVC is at most 30% of the identical compounded PVC without the carbodiimide compound. More preferably, the surface resistivity of the compounded PVC is at most 20% of the identical compounded PVC without the carbodiimide compound. Even more preferably, the surface resistivity of the compounded PVC is at most 10% of the identical compounded PVC without the carbodiimide compound.

Finally, the carbodiimide-containing heat stabilizer additives allow replacement of metal-containing co-stabilizers, particularly calcium stearate, hydrotalcite and zeolites, while maintaining heat stabilizer performance. Reduction in metal content of PVC compounds often results in widening of their processing windows. In particular, the heat stabilizer additives of the present disclosure allow reducing the total metal content (the metals including calcium, aluminum, magnesium, and sodium) of the heat stabilizer by 10-100% of standard amounts. Preferably, the total metals content is < 24 lbs total metals/lbs heat stabilizer, more preferably, < 5.3 lbs total metals/lbs heat stabilizer, even more preferably <1.3 lbs total metals/lbs heat stabilizer. Preferably, the heat stabilizer has a ratio of % calcium-based heat stabilizers/% carbodiimide of < 0.5, a ratio of % hydrotalcite/% carbodiimide of < 7.0, and a ratio of % zeolite/carbodiimide of < 4.0. More preferably, the ratio of %calcium-based heat stabilizers/% carbodiimide is < 0.3, even more preferably <0.1.

### EXAMPLES

The following examples further describe and demonstrate embodiments within the scope of the present subject matter. The Examples are given solely for the purpose of illustration and are not to be construed as limitations of the present invention, as many variations thereof are possible without departing from the spirit and scope of the invention.

The Examples further detail and explain preparation of plasticized PVC compounds with carbodiimide-containing additives of this invention, where they a) increase UV-light stability and reduce exudation of PVC compounds plasticized by the epoxidized natural oils and/or their blends with conventional plasticizers, b) (co)stabilize plasticized PVC compounds against thermal degradation, and c) significantly reduce surface resistivity of the plasticized PVC compounds.

The effect of carbodiimides on thermal and UV-light stability as well as on tendency for exudation of plasticized PVC compounds was evaluated using the screening PVC formulation shown in Table 1.

**Table 1. Screening plasticized PVC compound**

| **Component** | **Loading, phr** | **Supplier** |
|---|---|---|
| 70K PVC Resin | 100 | Westlake Corporation |
| Plasticizer | 40 | Various |
| Liquid Ba/Zn stabilizer (Mark 4781A) | 2.5 | Galata Chemicals |
| Stearic Acid | 0.2 | Peter Greven/Norac Inc. |

### Example 1.

Carbodiimides included Stabaxol I LF (SI LF) (a solid monomeric aromatic carbodiimide) and Stabaxol P200 (SP200) (a liquid oligomeric/polymeric aromatic carbodiimide based on based on tetramethylxylene diisocyanate) received from Lanxess Corporation as well as Bio-SAH 342Liquid (a liquid polymeric carbodiimide; polymerized 1,3-Bis(1-isocyanato-1-methylethyl)benzene) from Suzhou Ke Sheng Tong New Materials Technology Co., Ltd. They were used as received.

### Compounding

PVC dry bends prepared according to Table 1 were milled into sheets. The sheets were prepared under standardized conditions using a two-roll mill (Dr. Collin GmbH, Ebersberg, Germany). The gap between the rolls was about 0.5 mm, and the temperature of the rolls was 165°C. The time for preparation and homogenization was 3 minutes. Sheet thickness was 0.5 mm. The PVC sheet was continuously moved from the two sides to the center, and the enlargement thus obtained was distributed over the gap with a wooden spatula over the roll with intensive homogenization of all components.

Small strips of the milled sheets were subjected to the QUV test for specified periods of time. The test demonstrated UV-light stability of the tested compounds and their susceptibility to exudation that manifests itself in the formation of the sticky and/or oily residue on the surface under the test conditions.

UV light stability and exudation test

The test conditions are shown in Table 2.

**Table 2. QUV Test (ASTM G154, Cycle 1) Conditions**

| Cycle Time | Conditions |
|---|---|
| 8 hour UV exposure | Temperature @ 60°C, Irradiance @ 0.89 W/m² |
| 4 hour Condensation | Temperature @ 50°C |
| | Continuous cycle between exposure to UV light and Condensation |

At regular intervals of 100 hours, samples were assessed for tackiness to determine the "tack time". This is a visual/tactile qualitative test performed by touching the test specimen to check and find out time at which the specimen failed the test and its surface changed and become tacky (or oily) due to plasticizer exudation to the specimen surface. The tackiness test is performed on the test specimens during the UV exposure cycle, ensuring the specimens are dry before testing. The test indicated both the UV-light stability and exudation resistance of the tested PVC compounds. The longer the tack time, the more UV-light stable and exudation resistant the compound is. The obtained results are in Table 3. Carbodiimides were added with the plasticizer in amounts also shown in Table 3.

Abbreviations: epoxidized soybean oil (ESBO), dioctyl tere-phthalate (DOTP), diisononyl phthalate (DINP), epoxidized 2-ethylhexyl soyate (EEHS), trioctyl trimellitate (TOTM), di-(2-ethylhexyl) adipate (DEHA), di-(propyheptyl) phthalate (DPHP)

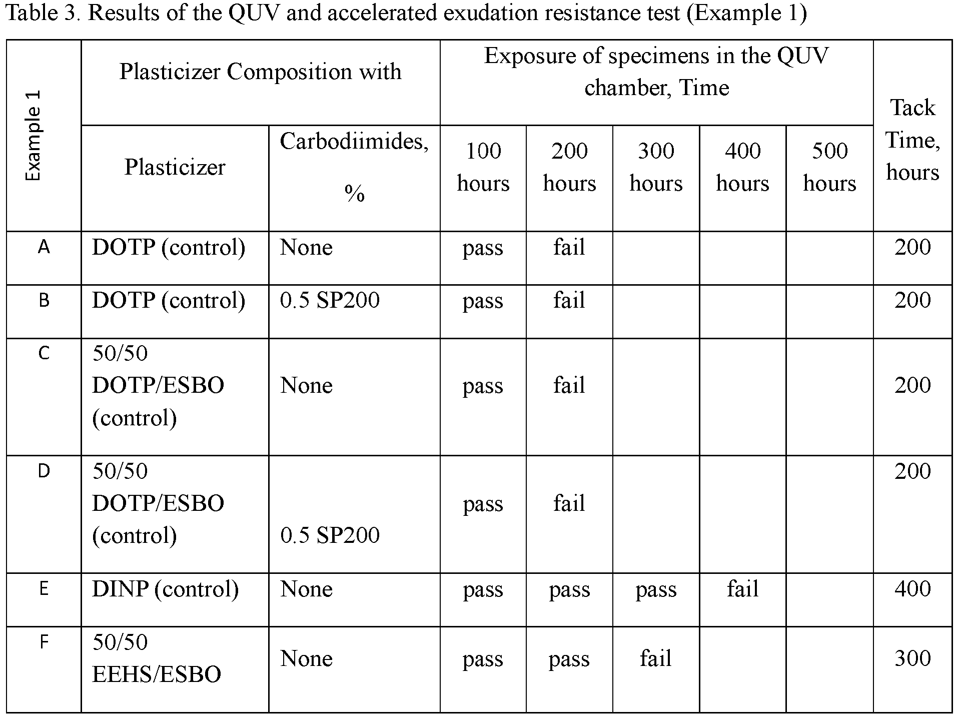

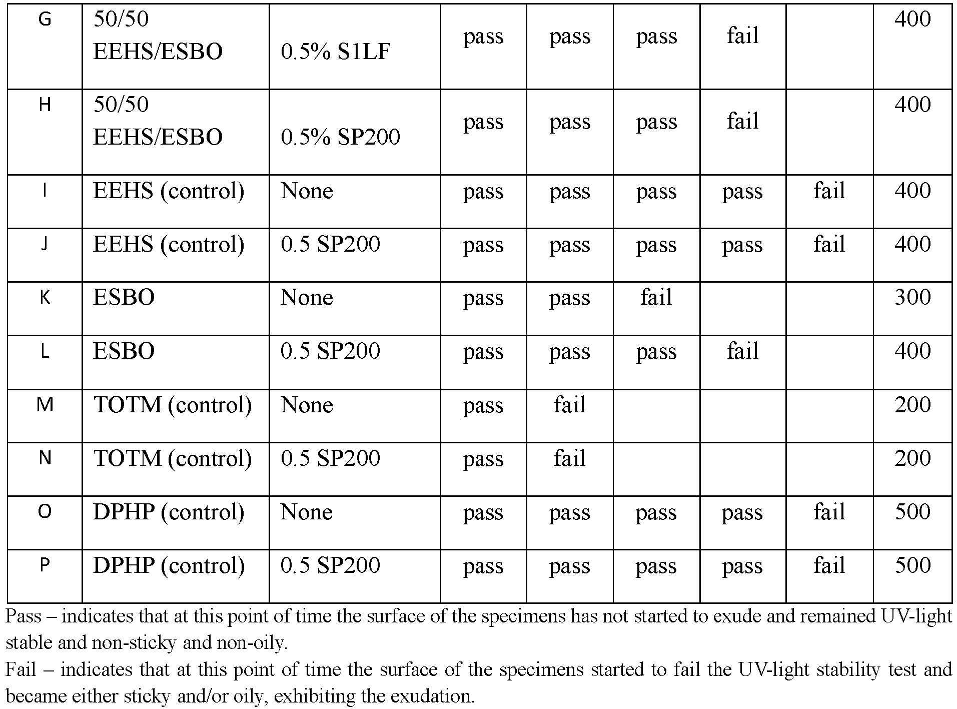

The point in time when sticky and/or oily residual was noticed on the specimen surface the first time was called Tack time.

Example 1 (Table 3) demonstrates that under the test conditions the presence of the carbodiimides did not change Tack time of all control compounds plasticized with the conventional plasticizers (DOTE: specimens A and B, EEHS: specimens I and J, TOTM: specimens M and N, and DPHP: specimens O and P and as well as their selected blends: specimens C and D). The presence of the carbodiimides increased Tack time of the PVC compounds plasticized with only ESBO (from 300 hours for specimen K to 400 hours for specimen L) and its 50/50 blend with EEHS (from 300 hours for specimen F to 400 hours for specimens G and H). This increase in Tack time was unexpected and significant (more than a 33% Tack time increase). As a result, the UV-light stability and the exudation resistance of PVC compounds plasticized with either ESBO or the 50/50 ESBO/EEHS increased and become the same as that with DINP (specimen E).

### Example 2. Surface Resistivity

The Surface Resistivity test is designed to measure how effective a surface dissipates static electricity and as a result reduces its surface resistivity. Typically, antistatic agents are added to polymer formulations, including PVC compounds, to dissipate static charge on the surface and reduce the surface resistivity to about 10¹² ohm/sq.

Surface resistivity was measured according to ASTM D257. Specimens of PVC compounds were prepared via compounding of the dry blends shown in Table 4 on a two-roll mill at 320°F for 2 minutes (see Compounding).

**Table 4. PVC compounds used in the surface resistivity test.**

| PVC compounds | Example 2A | Example 2B | Example 2C |
|---|---|---|---|
| PVC Resin (70K), phr | 100 | 100 | 100 |
| Calcium Carbonate, phr | 40 | 40 | 40 |
| A) DPHP (control), phr | 55 | | |
| B) 50/50 ESBO/EEHS (control), phr | | 45 | |
| C) 50/50 ESBO/EEHS with 0.5% SP200, phr | | | 45 |
| Ca/Zn heat stabilizer (Mark CZ2081), phr | 5 | 5 | 5 |

| | | | |
|---|---|---|---|
| Loadings of the plasticizer B and C were reduced compared to the loading of plasticizer A in order to match hardness of the resultant compounds. | | | |

Results of the surface resistivity test are in Table 5.

**Table 5. Surface resistivity Test (Example 2)**

| Measure Parameter | Example 2A | Example 2B | Example 2C |
|---|---|---|---|
| Surface Resistivity, ohm/sq | 1.3 x 10¹⁴ | 4.9 x 10¹³ | 3.2 x 10¹² |

Results of Example 2 demonstrate in Table 5 that the presence of SP200 reduced the surface resistivity compared to the conventional compound as well as the analogous compound with no carbodiimide by about two orders of magnitude and one order of magnitude, respectively (compare Example 2C with Example 2 A and Example 2B), demonstrating high effectiveness of using the carbodiimides as antistatic agents for plasticized PVC compounds.

### Example 3. Static Heat Stability test

15 mm wide strips were cut from each milled sheet such that eight rectangular samples (15 mm x 10 mm) from each sheet were produced. The samples were placed in an oven (Blue M Company, New Columbia, PA, USA) operating at 190°C for thermal aging. The samples were removed from the oven at the rate of one sample every ten minutes.

Assessment of the thermal stability of the flexible PVC formulations was carried out by determining the discoloration due to the polymer degradation. The Yellowness Index (ASTM D 1925-70 Yellowness Index of plastics) was measured and recorded for each sample using the microprocessor Hunterlab Labscan Spectro Colorimeter, Type 5100. The higher the Yellowness Index value, the lower the heat stability of a compound.

Milled sheets were prepared as previously discussed. Specimens of plasticized PVC compounds were prepared via compounding of the dry blends shown in Table 1, where the stabilizers were added at 1 phr and formulated by replacing known heat co-stabilizers either partially or in full. The static heat stability tests were run at 180°C. Results of the static heat stability tests, where calcium stearate was replaced in full with SP200 as shown in Table 6, are in Table 7. Results of the static heat stability tests where hydrotalcite was partially replaced with SP200 as shown in Table 8 are in Table 9.

**Table 6. Reformulating a heat stabilizer by replacing calcium stearate with SP200**

| Stabilizer components | Example 3A | Example 3B |
|---|---|---|
| Calcium Stearate, % | 7.75 | |
| Zinc stearate, % | 10.25 | 10.25 |
| Antioxidant, % | 2.50 | 2.50 |
| ESBO, % | 79.50 | 79.50 |
| SP200 | | 7.75 |

Table 6 shows compositions of the two heat stabilizers used for stabilizing PVC compounds of Table 1, where the Example 3A and Example 3B stabilizers were added at 1 phr.

**Table 7. Static heat stability results for stabilizers of Table 6 (expressed in Yellowness Index)**

| Time, min. | Example 3A | Example 3B |
|---|---|---|
| 0 | 8.5 | 6.4 |
| 20 | 15.9 | 11.4 |
| 40 | 31.1 | 20.5 |
| 60 | 43.6 | 37.7 |

According to Table 7, replacing calcium stearate with SP200 at the same weight resulted in substantially reduced yellowness (expressed in Yellowness Index) of the PVC compounds imparted by the carbodiimide-zinc component-containing stabilizer of this invention throughout the test from 0 to 60 min. Therefore, the results of Table 7 demonstrate that SP200 is a more efficient co-stabilizer than calcium stearate when calcium stearate was completely replaced in the stabilizer of Table 6. This substitution resulted in reduced total metal content of both the stabilizer and the PVC compounds containing it, since calcium-containing calcium stearate was replaced with the metal-free carbodiimide.

**Table 8. Reformulating a heat stabilizer by partially replacing the hydrotalcite with SP200**

| Stabilizer components | Example 3C | Example 3D |
|---|---|---|
| Hydrotalcite, % | 76.00 | 66.00 |
| Zinc Stearate, % | 10.00 | 10.00 |
| Diketone, % | 7.00 | 7.00 |
| Antioxidant, % | 7.00 | 7.00 |
| SP200, % | | 10.00 |

Table 8 shows compositions of the two heat stabilizers used for stabilizing PVC compounds of Table 1, where the Example 3C and Example 3D stabilizers were added at 2 phr.

**Table 9. Static heat stability results for stabilizers of Table 8 (expressed in Yellowness Index)**

| Time, min. | Example 3C | Example 3D |
|---|---|---|
| 0 | 10.1 | 8.7 |
| 20 | 19.8 | 17.1 |
| 40 | 58.1 | 52.1 |
| 60 | 94.3 | 83.9 |

According to Table 9, partial replacement (at 10%) of the hydrotalcite with SP200 resulted in substantially reduced yellowness (expressed in Yellowness Index) of the PVC compounds imparted by the carbodiimide-zinc component-containing stabilizer of this invention throughout the test from 0 to 60 min. Therefore, results of Table 9 demonstrate that at the tested loadings SP200 is a more efficient heat co-stabilizer than the hydrotalcite when the hydrotalcite was partially replaced in the stabilizer of Table 8. This substitution resulted in reduced total metal content of both the stabilizer and the PVC compounds containing the stabilizer, since part of the aluminum-magnesium-containing hydrotalcite was replaced with the metal-free carbodiimide.

**Table 10. Reformulating a heat stabilizer by replacing calcium stearate with SP200**

| Stabilizer Components | Example 3E | Example 3F |
|---|---|---|
| Zeolite, % | 53.69 | 53.69 |
| 6-Amino-1,3-dimethyluracil, % | 24.44 | 24.44 |
| Sodium Perchlorate, % | 3.53 | 3.53 |
| Calcium Stearate, % | 18.34 | |
| SP200, % | | 18.34 |

Table 10 shows compositions of the two heat stabilizers used for stabilizing PVC compounds of Table 1, where the Example 3E and Example 3F stabilizers were added at 2 phr.

**Table 11. Static heat stability results for stabilizers of Table 10 (expressed in Yellowness Index)**

| Time, min. | Example 3E | Example 3F |
|---|---|---|
| 0 | 16.30 | 16.22 |
| 20 | 24.56 | 24.02 |
| 40 | 33.28 | 28.52 |
| 60 | 42.98 | 33.66 |
| 80 | 44.66 | 45.56 |

According to Table 11, replacement of calcium stearate with SP200 resulted in comparable-to-reduced yellowness (expressed in Yellowness Index) of the PVC compounds imparted by the carbodiimide/nitrogen containing component stabilizer of this invention throughout the test from 0 to 80 min, where the nitrogen-containing component was 6-amino-1,3-dimethyluracil. Therefore, results of Table 11 demonstrate that at the tested loadings SP200 is a more efficient co-stabilizer than calcium stearate when it was replaced in the stabilizer of Table 10. This substitution resulted in reduced total metal content of both the stabilizer and the PVC compounds containing the stabilizer, where calcium-containing calcium stearate was replaced with the metal-free carbodiimide.

## Claims

1. A polymer compound comprising:
a) 30.0 to 89.0 wt% of a PVC homopolymer or PVC copolymer;
b) 10.0 to 69.0 wt% of a primary plasticizer comprising an epoxidized natural oil or its blends with epoxidized fatty acid monoesters;
c) 0.01 to 5.0 wt% of a carbodiimide selected from monomeric, oligomeric or polymeric carbodiimides; and
d) 0.3 to 5.0 wt% of a heat stabilizer comprising:
(1) zinc-containing components selected from neutral or overbased zinc salts of C₁-C₂₄ linear, branched, cyclic aliphatic or aromatic organic acids, zinc diketonates, zinc alcoholates, zinc phosphite, zinc perchlorate, zinc carbonate and mixtures thereof, or metal-free nitrogen-containing compounds selected from thiourea, triethanolamine, 6-amino-1,3-dimethyl-uracil, 6-amino-1,3-din-propyl-uracil, 6-amino-1,3-di-n-butyl-uracil, 6-amino-1,3-diethyl-thiouracil, 6-amino-1,3-di-n-butyl-thiouracil or mixtures thereof, and optionally
(2) co-stabilizers selected from hydrotalcites, zeolites, nitrogen-containing compounds, organic phosphite esters, diketones, mixed metal compounds selected from salts of Li, Na, K, Mg, Ca, Sr, Zn, Ba, Cd, Pb, Al, La, Ce or rare earth metals, metal carboxylates from zinc, calcium, magnesium, or barium carboxylates, alkali metal salts of perchloric acid, alkali metal salts of dicarboxylic acids and mixtures thereof.

2. The polymer compound of claim 1 wherein component (1) of the heat stabilizer is the zinc-containing components selected from neutral or overbased zinc salts of C₁-C₂₄ linear, branched, cyclic aliphatic or aromatic organic acids, zinc diketonates, zinc alcoholates, zinc phosphite, zinc perchlorate, zinc carbonate and mixtures thereof.

3. The polymer compound of claim 1 wherein component (1) of the heat stabilizer is the metal-free nitrogen-containing compounds selected from thiourea, triethanolamine, 6-amino-1,3-dimethyl-uracil, 6-amino-1,3-di-n-propyl-uracil, 6-amino-1,3-di-n-butyl-uracil, 6-amino-1,3-diethyl-thiouracil, 6-amino-1,3-di-n-butyl-thiouracil, preferablywherein the metal-free nitrogen containing component is 6-amino-1,3-dimethyluracil.

4. The polymer compound of claim 1 wherein the heat stabilizer comprises component (2).

5. The polymer compound of claim 1, wherein the carbodiimide is present in an amount of 0.01 to 1.0 wt% based on the total compound weight, preferably wherein the cabodiimide is present in an amount of 0.1 to 0.5 wt% based on the total compound weight.

6. The polymer compound of claim 1 wherein the natural oil is selected from plant oils and animal fats which may also contain triglyceride esters of fatty acids, preferably wherein the plant oils are selected from soybean oil, palm oil, olive oil, tall oil, castor oil, cotton seed oil, linseed oil, safflower oil, sunflower oil, canola oil, rapeseed oil, jatropha oil, algae oil, corn oil, tung oil, or mixtures thereof, more preferably wherein the natural oils are selected from soybean oil, linseed oil, or mixtures thereof.

7. The polymer compound of claim 6 wherein the animal fats are selected from beef/mutton, pork, dairy, poultry fat or mixtures thereof, preferably wherein the animal fats are selected from suet, dripping, tallow, lard, bacon, fatback, butter, poultry fat, schmaltz, blubber or mixtures thereof.

8. A method for preparing the polymer compound of claim 1 comprising combining the PVC homopolymer or PVC copolymer, primary plasticizer, carbodiimide and heat stabilizer.

9. The method of claim 8 wherein the carbodiimide is first combined with any combination of the other individual components, wherein at least one component is not combined, prior to combination with the remaining components.

10. The method of claim 8, wherein the carbodiimide is added to the plasticizer at a level of 0.1 to 5.0 wt% based on the total plasticizer weight, preferably wherein the carbodiimide is added to the plasticizer at the level of 0.5 to 1.0% based on the total plasticizer weight.

11. A heat stabilizer additive for reducing thermal degradation and/or surface resistivity of plasticized PVC compounds comprising:
a) 1.0 to 25.0 wt% of a carbodiimide selected from monomeric, oligomeric or polymeric carbodiimides; and
b) 75.0 to 99.0 wt% of a heat stabilizer comprising:
(1) zinc-containing component selected from neutral or overbased zinc salts of C₁-C₂₄ linear, branched, cyclic aliphatic or aromatic organic acids, zinc diketonates, zinc alcoholates, zinc oxide, zinc hydroxide, zinc phosphite, zinc perchlorate, zinc carbonate and mixtures thereof, or metal-free nitrogen-containing compounds selected from thiourea, triethanolamine, 6-amino-1,3-dimethyl-uracil, 6-amino-1,3-di-n-propyl-uracil, 6-amino-1,3-di-n-butyl-uracil, 6-amino-1,3-diethyl-thiouracil, 6-amino-1,3-di-n-butyl-thiouracil or mixtures thereof, and optionally
(2) co-stabilizers selected from hydrotalcites, zeolites, nitrogen-containing compounds, organic phosphite esters, diketones, mixed metal compounds selected from salts of Li, Na, K, Mg, Ca, Sr, Zn, Ba, Cd, Pb, Al, La, Ce or rare earth metals, metal carboxylates from zinc, calcium, magnesium, or barium carboxylates, alkali metal salts of perchloric acid, alkali metal salts of dicarboxylic acids and mixtures thereof.

12. The heat stabilizer additive of claim 11, wherein component b) is the zinc-containing components are selected from neutral or overbased zinc salts of C₁-C₂₄ linear, branched, cyclic aliphatic or aromatic organic acids, zinc diketonates, zinc alcoholates, zinc phosphite, zinc phosphite, zinc phosphite, zinc perchlorate, zinc carbonate and mixtures thereof, preferably wherein the salts of organic acids are selected from benzoate, oleate, stearate, neodecanoate, palmitate, soyate, tallate, myristate, hydroxystearate, laurates, and isononanoate.

13. The heat stabilizer additive of claim 11, wherein component b) is the metal-free nitrogen-containing compound selected from thiourea, triethanolamine, 6-amino-1,3-dimethyl-uracil, 6-amino-1,3-di-n-propyl-uracil, 6-amino-1,3-di-n-butyl-uracil, 6-amino-1,3-diethyl-thiouracil, 6-amino-1,3-di-n-butyl-thiouracil or mixtures thereof.

14. The heat stabilizer additive of claim 11 wherein the zinc-containing component is present in an amount of 0.001 to 25% based on the total weight of the stabilizer, preferably wherein the content of the zinc-containing component is 0.005% to 10% based on the total weight of the heat stabilizer

15. The heat stabilizer additive of claim 11 wherein the carbodiimide is present in an amount from 0.001 to 25% based on the total weight of the stabilizer, preferably wherein the carbodiimide is present in an amount from 0.005 to 15.0% based on the total weight of the stabilizer.

16. The heat stabilizer additive of claim 11 wherein the metal-free nitrogen containing component is 6-amino-1,3-dimethyluracil.

17. The heat stabilizer additive of claim 11 wherein the metal-free nitrogen-containing compound is present in an amount from 0.001 to 30.0%, based on the total weight of the composition, preferably wherein the metal-free nitrogen-containing compound is present in an amount from 0.005 to 25.0%, based on the total weight of the composition.

18. A stabilized compound comprising:
a) a PVC polymer; and
b) the heat stabilizer additive of claim 11,
wherein the stabilizer is present in an amount from 0.001 to 10 parts by weight per 100 parts by weight of the PVC polymer.

19. The stabilized compound of claim 18 wherein the stabilizer is present in an amount from 0.01 to 8 parts by weight per 100 parts by weight of the PVC polymer, preferably wherein the stabilizer is present in an amount from 0.05 to 5 parts by weight per 100 parts by weight of the PVC polymer.

20. An article comprising the PVC compound of claim 1.

21. A process to form the article of claim 20 comprising compounding steps selected from calendaring, molding or extrusion.

22. A process to reduce thermal degradation and/or the surface resistivity of a PVC compound with a carbodiimide-containing heat stabilizer additive, the process comprising compounding the PVC compound with the carbodiimide-containing heat stabilizer to form a compounded composition comprising:
a) 30.0 to 89.0 wt% of a PVC homopolymer or PVC copolymer;
b) 10.0 to 69.0 wt% of a primary plasticizer comprising an epoxidized natural oil or its blends with epoxidized fatty acid monoesters;
c) 0.01 to 5.0 wt% of a carbodiimide selected from monomeric, oligomeric or polymeric carbodiimides; and
d) 0.3 to 5.0 wt% of a heat stabilizer comprising:
(1) zinc-containing components selected from neutral or overbased zinc salts of C₁-C₂₄ linear, branched, cyclic aliphatic or aromatic organic acids, zinc diketonates, zinc alcoholates, zinc phosphite, zinc perchlorate, zinc carbonate and mixtures thereof, or metal-free nitrogen-containing compounds selected from thiourea, triethanolamine, 6-amino-1,3-dimethyl-uracil, 6-amino-1,3-di-n-propyl-uracil, 6-amino-1,3-di-n-butyl-uracil, 6-amino-1,3-diethyl-thiouracil, 6-amino-1,3-di-n-butyl-thiouracil or mixtures thereof, and optionally
(2) co-stabilizers selected from hydrotalcites, zeolites, nitrogen-containing compounds, organic phosphite esters, diketones, mixed metal compounds selected from salts of Li, Na, K, Mg, Ca, Sr, Zn, Ba, Cd, Pb, Al, La, Ce or rare earth metals, metal carboxylates from zinc, calcium, magnesium, or barium carboxylates, alkali metal salts of perchloric acid, alkali metal salts of dicarboxylic acids and mixtures thereof,
wherein the surface resistivity of the compounded PVC is at most 30% of the surface resistivity of an identical compounded PVC without the carbodiimide compound.

23. The process of claim 21 wherein the surface resistivity of the compounded PVC is at most 20% of the identical compounded PVC without the carbodiimide compound, preferably wherein the surface resistivity of the compounded PVC is at most 10% of the identical compounded PVC without the carbodiimide compound.
